## Europäisches Patentamt
## European Patent Office
## Office européen des brevets

(11) Numéro de publication : **0 130 093**
**B1**

(12) **FASCICULE DE BREVET EUROPÉEN**

(45) Date de publication du fascicule du brevet :
12.11.86

(51) Int. Cl.⁴ : **A 43 B 17/18, B 32 B 27/12,**
**A 43 B 17/10**

(21) Numéro de dépôt : **84400267.5**

(22) Date de dépôt : **08.02.84**

(54) Semelle première pour chaussures, pantoufles et articles chaussants avec fixation amovible.

(43) Date de publication de la demande :
02.01.85 Bulletin 85/01

(45) Mention de la délivrance du brevet :
12.11.86 Bulletin 86/46

(84) Etats contractants désignés :
BE DE GB IT NL

(56) Documents cités :
DE-A- 2 812 474
DE-A- 2 849 324
FR-A- 2 215 242
FR-A- 2 507 537
GB-A- 1 226 053

(73) Titulaire : **Bourdin, Yves**
**16-18 rue Desrivières**
**F-61100 Flers (FR)**

(72) Inventeur : **Bourdin, Yves**
**16-18 rue Desrivières**
**F-61100 Flers (FR)**

(74) Mandataire : **Madeuf, René Louis et al**
**Cabinet Madeuf 3, Avenue Bugeaud**
**F-75116 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 130 093 B1

### Description

Dans les chaussures, articles chaussants et en particulier dans les chaussures de sport, les premières de propreté sont soit posées dans la chaussure et de ce fait amovibles, mais ce moyen n'est pas très sûr, soit collées sur la première de montage avec une colle diluée dans un solvant ou un produit analogue.

Le solvant le plus utilisé est l'acétone mais cette fixation dégage une odeur très caractéristique et lors de la fabrication, en plus du stock de colle nécessaire dont l'odeur n'est parfois pas agréable, se dégage constamment dans l'atelier une odeur de solvant provoquant des émanations qui causent de gros problèmes, car un courant d'air doit être assuré en permanence pour limiter au minimum les risques d'incendie, ces solvants particulièrement volatils étant très inflammables. De plus, un vaste emplacement est indispensable pour les chaussures en cours de séchage d'où la nécessité de prévoir des installations spéciales très aérées obligeant à des investissements importants.

On connaît déjà du fait du FR-A-2 507 537, une semelle intérieure pour chaussures, pantoufles et articles chaussants avec fixation mobile constituée par un sandwich composé d'une couche inférieure de tissu adhésif sur laquelle est placée une mousse à gros alvéoles, le tout étant recouvert par une couche de tissu ; ensuite, chaque semelle, découpée à grandeur voulue, est placée à l'intérieur de la chaussure sur une première de montage composée d'un aiguilleté constituant le complément de l'élément de fixation de la semelle intérieure, la mousse étant une matière, par exemple à base de polyuréthane.

Conformément à l'invention, la semelle première de propreté pour chaussures, pantoufles et articles chaussants, avec fixation amovible vis-à-vis d'une première de montage composée d'une toile ou d'un aiguilleté ou tout autre produit servant de première de montage revêtue sur sa partie supérieure d'un jersey gratté constituant le complément de l'élément de fixation de la première de propreté constituée par un sandwich composé d'une couche inférieure en tissu sur laquelle est placée une mousse à gros alvéoles, le tout étant recouvert d'une couche de tissu, est caractérisée en ce que :

a) la couche inférieure de tissu est adhésive et est constituée par une matière polyester ayant des crochets en forme de champignon ou autre forme donnant le même résultat,

b) la couche de mousse à gros alvéoles, pouvant être traitée contre les odeurs et la transpiration, est réalisée par une matière polyester de forte densité comprenant une imprégnation soit d'un charbon actif soit d'un désodorisant,

c) la couche de tissu est une couche de tissu éponge par exemple de coton éponge constitué par un mélange coton polyamide dans un rapport de 80 % de coton et 20 % de polyamide et pouvant subir un traitement de blanchiment.

Diverses autres caractéristiques de l'invention ressortent d'ailleurs de la description détaillée qui suit.

Une forme de réalisation de l'objet de l'invention est représentée, à titre d'exemple non limitatif, au dessin annexé.

La figure 1 est une vue en plan, en partie arrachée, d'une première de propreté conforme à l'invention.

La figure 2 est une coupe, sensiblement suivant la ligne II-II de la fig. 1, d'une chaussure montrant la semelle proprement dite, l'empeigne de la chaussure, la première de montage et la première de propreté en cours de fixation.

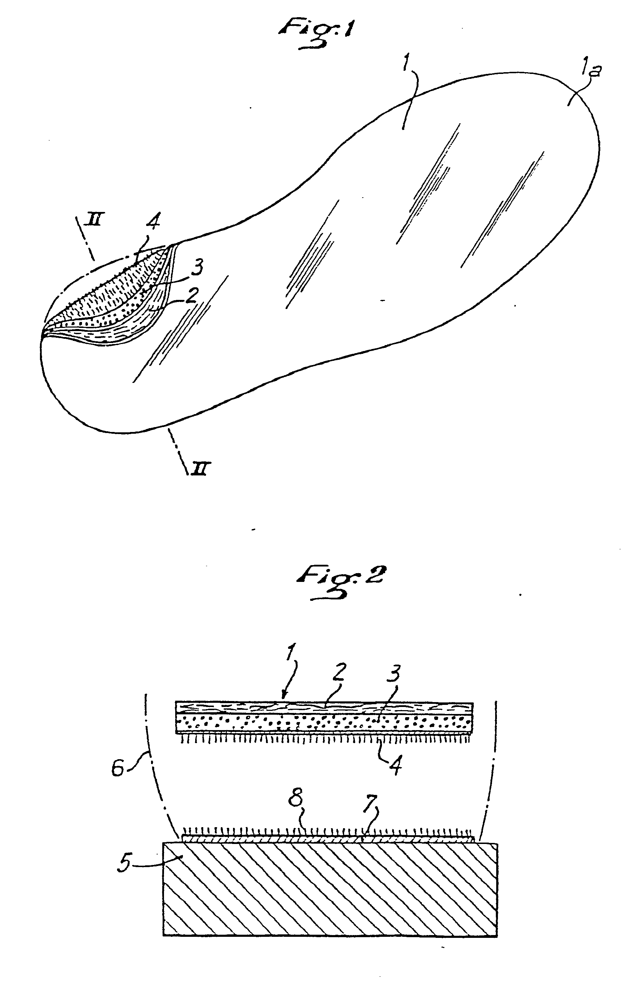

A la fig. 1, la première de propreté est réalisée à partir d'un sandwich comprenant à sa partie inférieure un élément adhésif 4 qui est un tissu adhésif du genre de celui connu dans le commerce sous le nom de « Velcro », puis cette couche de tissu adhésif 4 est revêtue à sa partie inférieure par une couche de mousse 3 à gros alvéoles qui est en général une matière dérivée du pétrole, par exemple du polyester, polyéther ou polyuréthane de densité suffisante, par exemple égale à 27, ayant une épaisseur de plusieurs millimètres, par exemple 4 mm. Cette couche de mousse 3 est imprégnée par un produit absorbeur d'odeur. Finalement, le sandwich se termine, à sa partie supérieure, par une couche de tissu éponge 2, par exemple de coton ou de matière analogue de couleurs diverses : rouge, vert, marron, etc. L'assemblage de ce sandwich est effectué par flammage ou par tout autre procédé analogue permettant de laver facilement la première de propreté.

A la fig. 2, on voit que la semelle 5 de la chaussure porte à sa partie supérieure, au-dessus de la jonction de l'empeigne 6, une semelle dite première de montage composée de la toile 7 et de l'élément de fixation 8, qui est un jersey gratté, de façon à permettre la fixation aisée de la première de propreté 1 par l'intermédiaire du tissu adhésif 4 dont les crochets en forme de champignon ou de forme tendant à obtenir le même résultat viennent adhérer au jersey gratté 8.

La première de propreté 1 permet donc de fabriquer des semelles sans collage évitant ainsi, pour les ouvriers, le mauvais toucher de la colle sur les doigts puis, pour les chaussures, les taches de colle, ce qui supprime tout nettoyage après la fixation de la première de propreté.

Dans le cas où pour une raison quelconque cette première de propreté ne se trouve pas bien placée dans la chaussure ou la pantoufle, on peut, sans difficulté, retirer cette première de propreté et la remplacer correctement d'où une simplification considérable puisque, lorsque la première de propreté normale était collée, il y avait lieu d'effectuer un travail long et pénible ; lorsqu'il se produisait une erreur de montage.

En outre, après un certain usage, les premières conformes à l'invention peuvent être sorties de la chaussure, facilement lavées et éventuellement, purement et simplement, remplacées par des premières de propreté neuves. La fixation de cette première de propreté se fait très rapidement du fait de la possibilité d'engager la partie arrière de chaque semelle dans le fond de la chaussure et ensuite d'aplatir la semelle bien correctement sur la première de montage au fond de la chaussure sous l'empeigne. On peut aussi intercaler aisément, entre la première de montage et la première de propreté, des conformateurs, le plus souvent réalisés en matière plastique, donnant au pied une très bonne position pour faciliter la marche. Ces conformateurs se trouvent ainsi bloqués parfaitement entre la première de fabrication et la première de propreté.

De plus, et comme cela a déjà été indiqué, la couche de mousse 3 est traitée à l'avance avec un charbon actif ou un désodorisant afin d'éviter la transpiration qui est déjà absorbée par la couche de coton 2 mais également par le produit actif inclus dans la mousse. La couche d'air emprisonnée dans la mousse 3 coopère également à l'absorption de la transpiration.

Il y a lieu de signaler également qu'à l'usage, et du fait qu'aucun repli n'est possible du fait de la bonne fixation de la première de propreté, aucune blessure n'est provoquée par la chaussure même lors d'une compétition.

Bien que ces premières de propreté soient tout à fait adaptées pour les chaussures de sport, elles peuvent être également montées dans des chaussures d'usage courant, avec les mêmes avantages, par collage de la partie grattée sur un cuir, un synderme ou tout autre produit entrant dans la fabrication de la chaussure ou de l'article chaussant.

Finalement, il y a lieu de signaler que la première de montage utilise une toile, par exemple, en fil polypropylène de torsion zéro tandis que le jersey gratté est enduit d'une résine facilitant le montage de la première de propreté.

La fabrication des premières de propreté s'effectue aisément. En effet, après avoir réalisé de grandes surfaces du sandwich décrit ci-dessus, il suffit alors de découper à taille voulue les premières de propreté, par exemple à l'aide d'un outil de découpe par emboutissage.

## Revendications

1. Semelle première de propreté pour chaussures, pantoufles et articles chaussants, avec fixation amovible vis-à-vis d'une première de montage composée d'une toile (7) ou d'un aiguilleté ou tout autre produit servant de première de montage revêtue sur sa partie supérieure d'un jersey gratté constituant le complément de l'élément de fixation de la première de propreté constituée par un sandwich composé d'une couche inférieure en tissu sur laquelle est placée une mousse (3) à gros alvéoles, le tout étant recouvert d'une couche de tissu (2), caractérisée en ce que :

a) la couche inférieure de tissu (4) est adhésive et est constituée par une matière polyester ayant des crochets en forme de champignon ou autre forme donnant le même résultat,

b) la couche de mousse (3) à gros alvéoles, pouvant être traitée contre les odeurs et la transpiration, est réalisée par une matière polyester de forte densité comprenant une imprégnation soit d'un charbon actif soit d'un désodorisant,

c) la couche de tissu (2) est une couche de tissu éponge, par exemple de coton éponge constitué par un mélange coton polyamide dans un rapport de 80 % de coton et 20 % de polyamide et pouvant subir un traitement de blanchiment.

2. Semelle première de propreté pour chaussures, pantoufles et articles chaussants suivant la revendication 1, caractérisée en ce que le sandwich tissu éponge/mousse/tissu adhésif est obtenu par un assemblage par flammage.

## Claims

1. Insole for shoes, slippers and footwear articles, with removable fixation relatively to a mounting sole comprising a cloth (7) or a tagging felt or any other product used as a mounting sole coated on its upper part with a napped stockinet forming the complement of the fixation element of the insole formed by a sandwich made by a lower layer of fabric on which is placed a foam (3) with great cells, the whole being covered with a layer of fabric (2), characterized in that :

a) the lower layer of fabric (4) is adhesive and is formed by a polyester material having hooks with a mushroom shape or any other shape providing the same result,

b) the layer of foam (3) with great cells, which can be treated against odors and perspiration is realised by a heavy density polyester material comprising an impregnation of either an active coal or a deodorant,

c) the layer of fabric (2) is a layer of sponge cloth for example sponge cotton made by a cotton-polyamide mixture in a ratio of 80 % cotton and 20 % polyamide, and able to be bleached.

2. Insole for shoes, slippers and footwears articles according to claim 1, characterized in that the sponge cloth/foam/adhesive fabric sandwich is obtained by a melting process.

## Patentansprüche

1. Einlegesohle für Schuhe, Hausschuhe und Schuhwerk, die an einer Brandsohle lösbar befestigbar ist, welche von einem Leinenstoff (7), einem Nadelfilz oder einem anderen als Brandsohle geeigneten Erzeugnis gebildet und auf ihrer Oberseite mit einem gerauhten Jersey als Gegenstück zum Befestigungselement der Einlegesohle überzogen ist, die aus einem Verbundmaterial aus einer unteren Gewebelage, einem darübergelegten grobzelligen Schaumstoff (3) und einer das Ganze überziehenden Gewebelage (2) besteht, dadurch gekennzeichnet, daß

a) die untere Gewebelage (4) klebend und von einem Polyestermaterial gebildet ist, das Befestigungselemente in Pilzform oder einer anderen, die gleiche Wirkung herbeiführenden Form aufweist,

b) die grobzellige Schaumstoff-Lage (3), die gegen Geruch und Transpiration behandelt sein kann, aus einem Polyester-Material großer Dichte ist, welches mit Aktivkohle oder einem Desodorant getränkt ist, und

c) die Gewebelage (2) eine Frottiergewebelage ist, z. B. aus Baumwollfrottee, das aus einem Baumwolle-Polyamid-Gemisch mit einem Anteil von 80 % Baumwolle und 20 % Polyamid besteht und bleichbar ist.

2. Einlegesohle für Schuhe, Hausschuhe und Schuhwerk nach Anspruch 1, dadurch gekennzeichnet, daß das Verbundmaterial Frottee/Schaumstoff/Klebegewebe durch Anschmelzen zusammengefügt wird.

0 130 093

*Fig.1*

*Fig.2*

1